Europäisches Patentamt

European Patent Office

Office européen des brevets

(11) Numéro de publication: **0 389 314 B1**

(12) **FASCICULE DE BREVET EUROPEEN**

(45) Date de publication de fascicule du brevet: **09.11.94**  (51) Int. Cl.⁵: **C03C  1/02**, C03B 3/02, C03B 5/00, B09B 3/00

(21) Numéro de dépôt: **90400469.4**

(22) Date de dépôt: **21.02.90**

(54) Procédé et dispositif de fusion de matières contenant des fibres minérales.

(30) Priorité: **23.02.89 SE 8900635**

(43) Date de publication de la demande:
**26.09.90 Bulletin  90/39**

(45) Mention de la délivrance du brevet:
**09.11.94 Bulletin  94/45**

(84) Etats contractants désignés:
**AT BE CH DE DK ES FR GB IT LI LU NL SE**

(56) Documents cités:
**EP-A- 0 137 881
EP-A- 0 319 680
US-A- 3 847 664
US-A- 4 145 202
US-A- 4 720 295**

**PATENT ABSTRACTS OF JAPAN vol. 7, no. 7
(C-144)(1152), 12 janvier 1983; & JP-A-57 166
333 (ASAHI FIEBER GLASS K.K.) 13.10.1982**

(73) Titulaire: **ISOVER SAINT-GOBAIN
Les Miroirs
18, avenue d'Alsace
F-92400 Courbevoie (FR)**

(72) Inventeur: **Strnad, Vojtech
Harlyckegatan 5A
S-252 58 Helsingborg (SE)**

(74) Mandataire: **Luziau, Nelly et al
Saint Gobain Recherche
39, Ouai Lucien Lefranc
BP 135
F-93303 Aubervilliers Cédex (FR)**

Rank Xerox (UK) Business Services
(3.10/3.09/3.3.3)

## Description

Domaine technique.

La présente invention concerne un procédé pour fondre dans un four des matières contenant des fibres de matière inorganique, ainsi que de la substance organique et de l'eau, le cas échéant.

Le procédé conforme à l'invention convient particulièrement pour la fusion de déchets provenant de la production de fibres minérales, spécialement de fibres de verre, qui sont des déchets du type dans lequel les proportions de fibres, de substance organique et d'eau peuvent varier beaucoup.

Arrière-plan de l'invention.

Une façon de traiter les déchets de ce type provenant de la production de fibres minérales est de les évacuer aux immondices. Pour des raisons évidentes, ce n'est pas un procédé satisfaisant, en particulier si la substance organique des déchets contient des agents tels que du phénol libre, du formol, de l'huile et analogues, qui peuvent provoquer des inconvénients écologiques.

La fusion est un autre procédé pour le traitement de ce genre de déchets de fibres, qui a été essayé de nombreuses façons différentes, mais sans résultats satisfaisants. Un tel procédé de fusion est beaucoup plus difficile à mettre en pratique qu'on ne pourrait l'imaginer. Lorsqu'on essaie de fondre les déchets par un apport d'énergie extérieure, il se forme une masse en cours de fusion relativement solide qui arrête plus ou moins complètement l'apport d'air à la substance organique des déchets. En outre, la masse en cours de fusion a une consistance pâteuse qui la rend difficile à manipuler, spécialement si elle adhère aux surfaces internes de l'incinérateur de déchets. De plus, les fumées de combustion qui se dissipent contiennent souvent des gaz imbrûlés qui provoquent une pollution atmosphérique. Le problème ne peut être résolu de façon économique si les déchets sont exposés à des températures très élevées dans un four traditionnel, parce qu'il faut du temps avant que la chaleur pénètre dans la matière à cause de la faible conductivité thermique des déchets. L'efficacité d'une telle réalisation est donc très faible.

Dans ces circonstances, des expériences ont été faites en vue de réutiliser les déchets comme matière première dans des fours de verrerie, mais cela ne s'est révélé possible que pour les déchets ayant une faible teneur en substance organique et avec une décomposition très poussée des déchets fibreux, ce qui augmente aussi considérablement le coût du procédé.

Le procédé de fusion peut être amélioré si les déchets sont disposés à la surface d'une masse fondue existante dans un four de fusion spécial et si la chaleur pour la fusion est apportée par la chaleur de combustion émanant d'un certain nombre de brûleurs disposés dans le four, par le courant alimentant des électrodes disposées dans la masse fondue ou par le courant alimentant des résistances électriques logées dans la sole du four. Ces procédés, suivant lesquels les déchets sont fondus par la chaleur du milieu ambiant, ont cependant en commun que la consommation d'énergie est élevée. En outre, il reste difficile d'obtenir des fumées de combustion exemptes de gaz imbrûlés, de sorte que le problème de la pollution atmosphérique subsiste au moins pour partie.

Le but de l'invention est d'améliorer le procédé de fusion en évitant les inconvénients précités.

Suivant la présente invention, ceci est réalisé par le procédé faisant l'objet des revendications.

Description générale de l'invention.

La principale nouveauté de la présente invention est que la matière fibreuse est fondue par la chaleur qui se dégage au sein de la matière elle-même lorsque la substance organique est brûlée, de sorte que la nécessité d'un supplément d'énergie peut, en règle générale, être complètement supprimée. Plus précisément, l'invention concerne un procédé pour fondre dans un four des matières contenant des fibres organiques, ainsi que de la substance organique et de l'eau, le cas échéant. La caractéristique du procédé est l'apport d'oxygène pur au four, ou dans la mesure requise, l'apport d'air enrichi en oxygène, dont la teneur en oxygène est, de préférence, d'au moins environ 40% en volume. Ce procédé s'est révélé assurer une combustion très rapide et efficace de la substance organique avec des fumées de combustion propres.

Le procédé de fusion conforme à l'invention est, en d'autres termes, fort efficace et réduit fortement la nécessité d'un supplément d'énergie. Par exemple, une bonne valeur représentative pour un four avec apport de chaleur extérieure ayant une capacité de fusion de 6,0 tonnes de déchets par mètre carré et par 24 heures est une consommation de chaleur de 600 kilocalories par kilogramme de déchets. Suivant le procédé de la présente invention, la fusion peut être exécutée avec une capacité de fusion au moins aussi élevée, mais absolument sans consommation d'énergie.

Suivant une forme de réalisation préférée du procédé, de l'oxygène ou de l'air enrichi en oxygène est admis près de la couche limite entre la masse fondue et la matière fibreuse qui la surmonte, spécialement au voisinage immédiat de cette couche limite. L'oxygène ou l'air enrichi en oxygène peut aussi être admis par le dessous.

Il convient d'observer que l'invention ne nécessite pas une quantité considérable de masse fondue dans le four. La masse fondue peut, par exemple, consister en une mince couche de base à partir de laquelle l'évacuation se fait de façon continue à mesure que le processus de fusion se poursuit.

Le procédé conforme à l'invention peut donc être exécuté avec d'excellents résultats au moyen d'oxygène pur. Toutefois, cette variante avec de l'oxygène pur n'est pas toujours nécessaire; de bons résultats ont été obtenus même à une limite inférieure de 40% en volume d'oxygène. Une forme de réalisation davantage préférée de l'invention est d'utiliser de l'air enrichi en oxygène, dont la teneur en oxygène est d'au moins environ 50% en volume et de préférence d'au moins environ 60% en volume. Pour certaines applications, la limite d'environ 75% en volume peut être une limite inférieure spécialement préférée.

Le type de matière qui peut être fondue suivant le procédé conforme à l'invention a été envisagé ci-dessus. La matière peut cependant être définie par le terme bien connu de "température adiabatique" conformément à ce qui suit : la combustion de la substance organique (normalement l'agent liant) en atmosphère d'oxygène a lieu très rapidement et avec un dégagement considérable de chaleur. La chaleur est utilisée pour chauffer tous les composants, à savoir les fibres, l'eau et les gaz usés. La température $T_x$ qui est atteinte si toute perte de chaleur est empêchée (température dite adiabatique) peut être calculée à l'aide de la formule suivante :

$$T_x = \frac{41,4 \ . \ \frac{x}{y} - T_L + 5419 \ . \ x + 560 - 520 \ . \ z}{0,3545 \ . \ x + 0,02343 \ . \ (100 - y) \ . \ x + 30,52}$$

où

$T_x$ = température adiabatique (°)

x = teneur en agent liant (%) (pouvoir calorifique de l'agent liant : 5500 kilocalories/kilogramme)

y = teneur en oxygène de l'air admis (%)

$T_L$ = température de l'air

z = teneur en eau des déchets (%)

A propos de la fusion de déchets de fibres minérales, il a été démontré que les paramètres x, y, z et $T_L$ peuvent varier dans une large mesure sans effet nuisible sur la fusion, à la condition que la température adiabatique soit suffisamment élevée. Il a ainsi été démontré qu'à une température adiabatique excédant environ 850°C, les déchets peuvent être fondus avec de bons résultats et pour des valeurs très variables des paramètres en question, comme la teneur en agent liant des déchets, la teneur en oxygène de l'air enrichi en oxygène qui est admis, la température de l'air enrichi en oxygène et la teneur en eau de la matière, etc.

Une valeur particulièrement intéressante de la température adiabatique est une limite inférieure d'environ 1200°C, parce qu'il s'est révélé que la fusion de déchets, dont la température adiabatique excède cette limite, peut avoir lieu dans un four sans aucune difficulté pour faire s'écouler la masse fondue hors du four. A la limite adiabatique précitée, la masse fondue devient tellement chaude qu'elle s'écoule d'elle-même hors du four de fusion, évidemment à la condition que le four soit suffisamment isolé.

Pour les déchets dont la température adiabatique est inférieure à 1200°C, il s'est révélé avantageux d'apporter un supplément de chaleur au four, principalement pour maintenir la sole du four chaude, afin de faciliter le transport de la matière fondue hors du four. L'apport de chaleur supplémentaire en question peut avoir lieu suivant des procédés déjà connus.

Il convient de noter, en outre, que la combustion de la substance organique est extrêmement efficace et que le fort enrichissement en oxygène signifie que la quantité de gaz brûlés émanant du four est relativement petite. La réduction de la quantité de gaz brûlés signifie que le traitement de substances écologiquement dangereuses éventuellement dégagées lors du procédé sera simple et économique.

Enfin, on pourrait ajouter sous ce rapport qu'une usine expérimentale construite conformément aux principes énoncés ci-dessus a eu les paramètres opératoires suivants lors de la fusion de déchets de fibres de verre contenant environ 6% d'agent liant organique.

| Capacité de fusion : | au maximum 6,0 tonnes par $m^2$ et par 24 heures |
| Quantité de gaz brûlés : | 150 $Nm^3$ par tonne de déchets |
| Consommation d'énergie pour la fusion : | 0 |
| Consommation d'énergie pour maintenir la sole chaude : | 80 kilocalories par kilogramme de déchets ( = 0,33 MJ/kg) |

Dessins.

Quelques formes de réalisation de l'invention sont décrites ci-après à titre d'exemple uniquement, avec référence aux dessins annexés, dans lesquels :

la Fig. 1 est une vue d'un four conforme à l'invention;

la Fig. 2 est une vue d'un four fonctionnant suivant les principes de la présente invention et dans lequel un supplément de chaleur est apporté à la couche de base de masse fondue au moyen du courant électrique qui passe à travers la masse;

la Fig. 3 est une vue suivant la ligne B-B de la Fig. 2;

la Fig. 4 illustre un autre exemple d'un four fonctionnant suivant les principes de la présente invention et dans lequel un supplément de chaleur est apporté à la couche de base au moyen du courant électrique qui passe dans des résistances électriques logées dans la base du four;

la Fig. 5 est un autre exemple, dans lequel un supplément de chaleur est apporté à la couche de base au moyen de gaz chauds qui sont produits par un brûleur et qui passent à l'intérieur de la sole du four, et

la Fig. 6 est un autre exemple, dans lequel la masse fondue repose sur une couche de briques réfractaires qui, par sa forme, donne accès tant à l'oxygène qu'à l'air enrichi en oxygène pour qu'ils parviennent aux déchets et pour que le verre fondu avance vers une sortie.

Du fait que divers détails des différentes variantes des fours présentées dans les différentes figures des dessins sont communs pour ces différentes figures, les mêmes chiffres de référence sont utilisés pour les détails identiques ou équivalents. Cela signifie aussi que les figures des dessins sont en principe décrites collectivement sans renvoi spécial aux figures respectives, à l'exception des cas où interviennent des détails formant variante. En outre, la construction des fours respectifs et leur fonction sont fondamentalement les mêmes que dans la technique déjà connue, sauf évidemment les nouvelles caractéristiques qui sont conditionnées par la présente invention et la description ne doit dès lors pas être trop détaillée. La construction et la fonction des fours sont donc expliquées d'une traite.

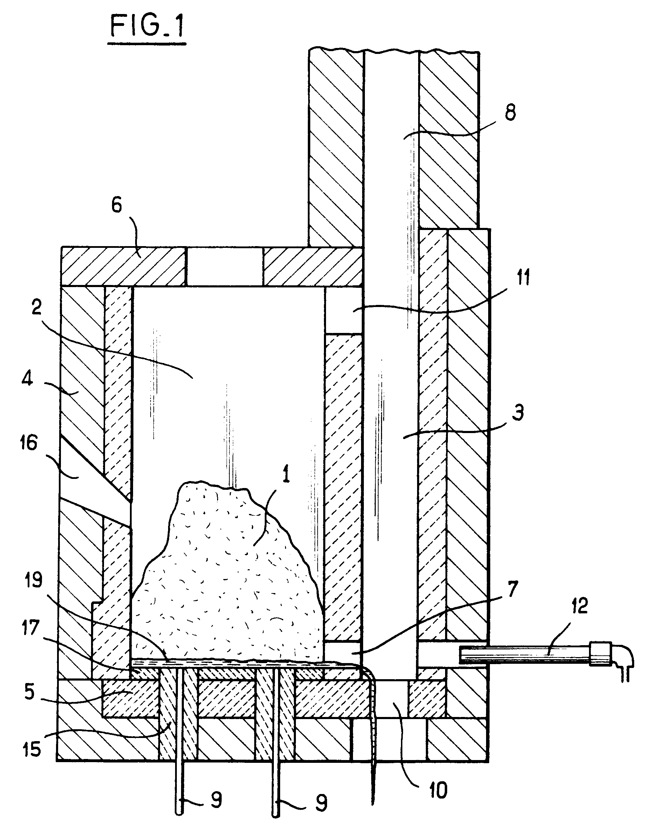

Ainsi, aux Fig. 1 à 6, les déchets 1 sont introduits dans un four chaud, qui consiste en une chambre de fusion 2 et en une chambre d'évacuation 3. La section de fusion est délimitée par des parois 4, une sole 5 et une voûte 6.

La substance organique des déchets prend feu à cause de la chaleur et la combustion est entretenue sous l'influence d'une atmosphère riche en oxygène qui est admise dans les déchets par le dessous à l'aide d'un certain nombre d'injecteurs/valves 9 disposés dans des briques réfractaires spéciales 15 dans la sole 5 du four. Les déchets fondent sous l'influence de la chaleur de la combustion et ruissellent vers la sole 5 du four et dans la chambre d'évacuation 3 par l'ouverture latérale 7. Ensuite, la masse fondue quitte la chambre d'évacuation par un orifice d'évacuation 10. Les gaz brûlés de la combustion quittent le four par un orifice d'évacuation de gaz 11 et une cheminée 8, qui est commune aux chambres de fusion et d'évacuation.

Un brûleur 12 est disposé dans la chambre d'évacuation pour maintenir la température de la masse fondue évacuée, si la chose est nécessaire, afin de faciliter le transfert hors du four.

La fusion peut être observée par un regard d'inspection 16 dans la paroi 4.

Les indications ci-après sont d'application pour les différences entre les diverses figures des dessins.

Dans la forme de réalisation suivant la Fig. 1, la partie supérieure de la sole 5 est formée par un revêtement spécial 17 fait d'une substance qui est particulièrement résistante à la matière fondue. Les injecteurs 9 émergent par leur extrémité au niveau de la partie inférieure de l'ouverture 7. Cela signifie qu'il n'y a qu'une couche mince 19 de matière fondue sur la sole 5.

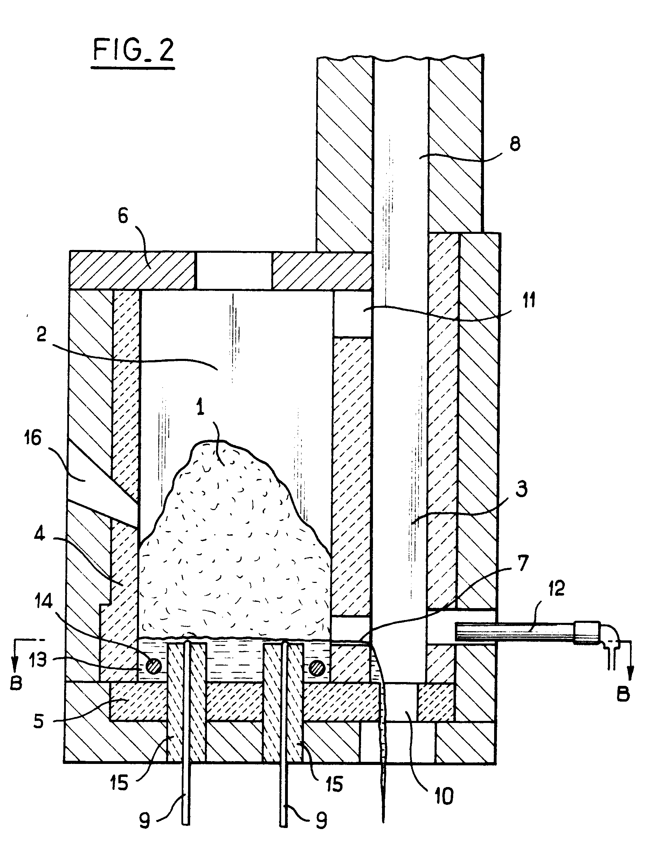

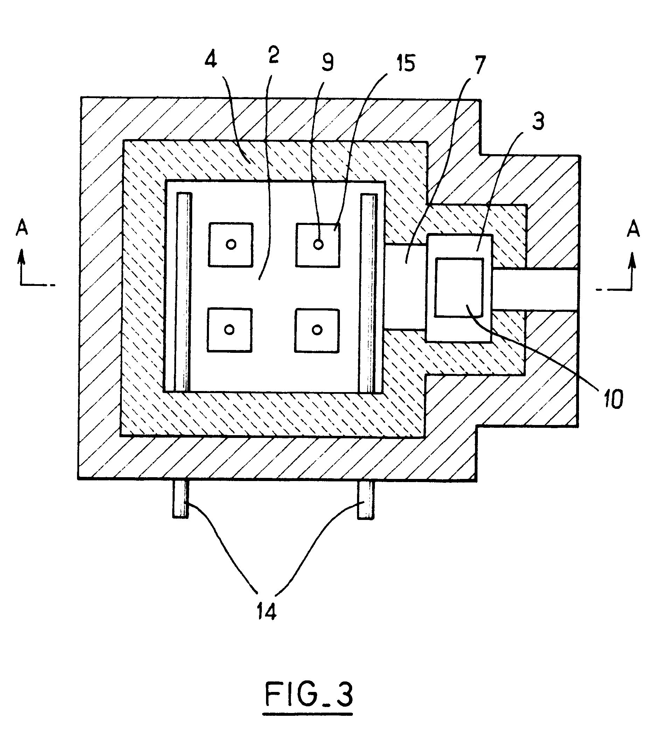

Dans la forme de réalisation suivant les Fig. 2 et 3, les injecteurs 9 et les briques 15 qui les accompagnent s'élèvent verticalement au-dessus de la surface supérieure de la sole 5, de sorte que les sorties des injecteurs se trouvent au niveau de l'ouverture d'évacuation latérale 7. Par conséquent, une masse fondue 13 se forme dans la partie inférieure de la chambre de fusion jusqu'au niveau de l'ouverture d'évacuation 7. Des électrodes 14 sont disposées dans cette masse fondue pour faire passer du courant et dissiper ainsi un supplément de chaleur, afin de maintenir la température de fusion et de faciliter l'évacuation de la masse fondue.

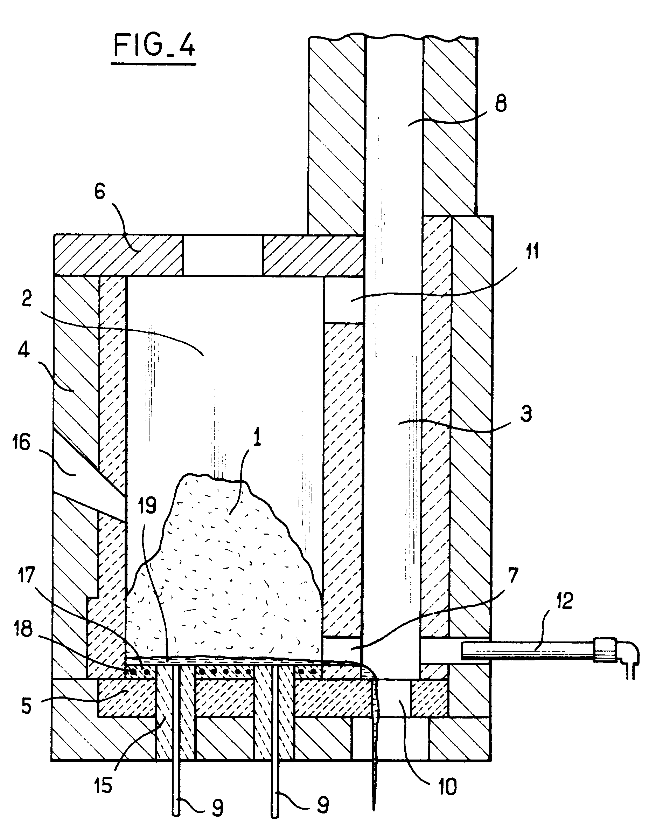

La forme de réalisation suivant la Fig. 4 correspond à celle suivant la Fig. 1, sauf que des résistances électriques 18 sont disposées dans le revêtement 17 pour maintenir la température de la masse fondue afin de faciliter l'évacuation hors du four.

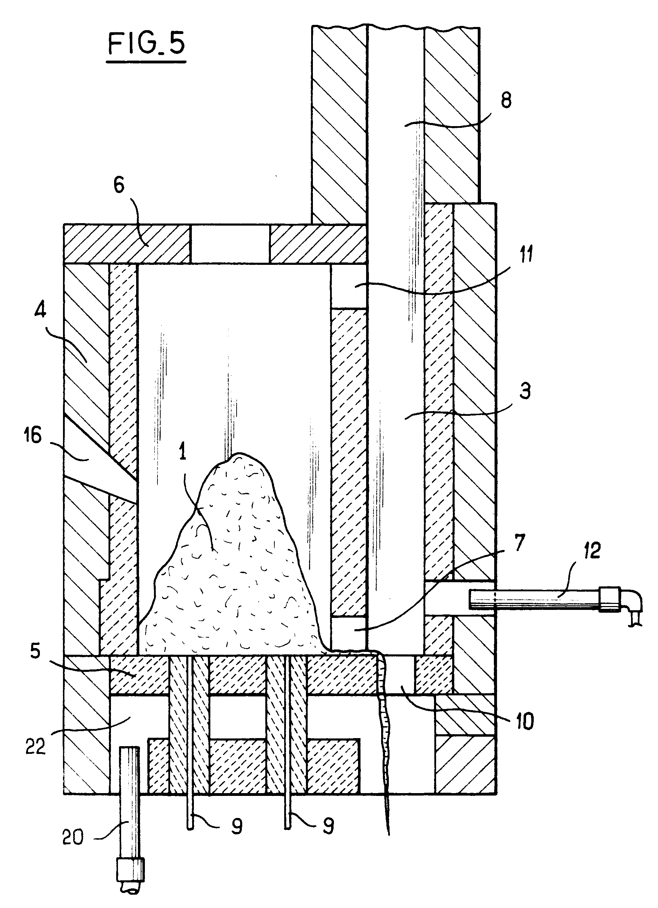

Dans la forme de réalisation suivant la Fig. 5, un brûleur 20 est disposé près de la sole du four, endroit auquel la sole se compose d'une zone de combustion et de canaux 22 communiquant avec cette zone pour le passage des gaz de combustion et donc l'apport de chaleur à la base réfractaire du four afin de la maintenir chaud. Les gaz de combustion passent aussi par l'orifice 10 pour la matière fondue, avant de sortir par la cheminée 8, de sorte qu'ils contribuent davantage à assurer l'évacuation de la matière fondue.

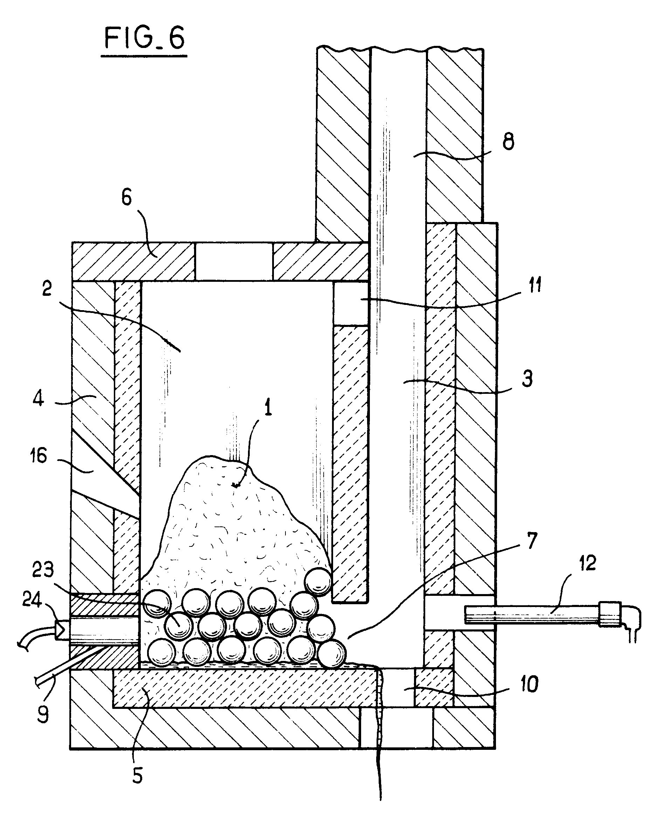

Enfin, la forme de réalisation suivant la Fig. 6 comprend un lit 23 de plusieurs couches de briques réfractaires qui ont en l'occurrence une forme sphérique, sur la sole 5 de la chambre de fusion 2 du four. En outre, un brûleur 24 est disposé à la partie inférieure de l'une des parois latérales du four pour chauffer le lit si la chose est nécessaire. Au contraire des formes de réalisation illustrées précédemment, la ou les injecteurs 9 pour admettre de l'oxygène ou de l'air enrichi en oxygène dans le lit 23 ne sont pas disposées pour introduire l'oxygène ou l'air enrichi en oxygène directement par le dessous, mais via une paroi latérale en communication avec le brûleur 24. Le lit 23 a une épaisseur telle qu'il masque l'ouverture d'évacuation 7. Le lit 23 contribue à la distribution de l'oxygène ou de l'air enrichi en oxygène sur toute la surface inférieure de la matière.

**Revendications**

1. Procédé pour fondre dans un four uns matière, spécialement des déchets, contenant des fibres inorganiques, de la substance organique et de l'eau, le cas échéant, caractérisé en ce que de l'oxygène pur ou de l'air enrichi en oxygène, dont la teneur en oxygène est d'au moins environ 40 % en volume, est admis dans le four, de façon que la substance organique de la matière fibreuse soit brûlée et dégage au moins principalement la chaleur qui fait fondre la matière fibreuse, et en ce qu'un supplément de chaleur est apporté, si nécessaire, pour faciliter l'évacuation de la matière fondue.

2. Procédé selon la revendication 1, caractérisé en ce que l'oxygène ou l'air enrichi en oxygène est admis près, et de préférence très près, de la couche limite entre matière fondue et la matière fibreuse qui la surmonte.

3. Procédé selon la revendication 1 ou 2, caractérisé en ce que l'oxygène ou l'air enrichi en oxygène est admis par le dessous.

4. Procédé selon l'une des revendications précédentes, caractérisé en ce que de l'air enrichi en oxygène, dont la teneur en oxygène est d'au moins 50 % en volume et de préférence d'au moins 60 % en volume, par exemple d'au moins 75 % en volume, est admis dans le four.

5. Procédé selon l'une des revendications précédentes, caractérisé en ce qu'il est exécuté avec une matière fibreuse dont la température adiabatique excède environ 850°C et, de préférence, excède environ 1200°C.

6. Procédé selon l'une des revendications précédentes, caractérisé en ce qu'il est exécuté avec des déchets provenant de la production de fibres minérales, de préférence de fibres de verre.

7. Dispositif pour la mise en oeuvre du procédé de fusion selon l'une des revendications 1 à 6, caractérisé en ce qu'il comprend une chambre (2) de fusion de la matière à traiter délimitée par des parois (4), une sole (5) et une voûte (6), et une chambre séparée (3) d'évacuation de la masse fondue et des gaz de combustion, une ouverture (7) pratiquée dans la partie inférieure de la paroi séparant les deux chambres permettant l'écoulement de la masse fondue formée au voisinage de la sole (5) avant évacuation de cette masse par un orifice (10) de la chambre d'évacuation (3) et un orifice (11) pratiqué dans la partie supérieure de ladite paroi permettant l'évacuation des gaz de combustion vers une cheminée (8) et caractérisé en ce qu'il comprend, en outre des moyens d'injection d'un gaz (9) qui débouchent dans une couche limite séparant la masse fondue du reste de la matière à traiter qui la surmonte dans la chambre de fusion.

**8.** Dispositif conforme à la revendication 7, caractérisé en ce que les moyens d'injection du gaz sont constitués par des injecteurs (9) disposés dans des briques réfractaires (15) et situés dans la sole (5) de la chambre (2) de fusion de manière que leur extrémité émerge au niveau de la partie inférieure de l'ouverture (7) pour l'écoulement de la masse fondue vers la chambre (3) d'évacuation et au voisinage de la couche limite entre la masse fondue et la matière à traiter.

**9.** Dispositif conforme à la revendication 8, caractérisé en ce que la sole (5) de la chambre (2) de fusion porte un revêtement (17), en une matière résistante à la masse fondue, dont la surface correspond à la partie inférieure de l'ouverture (7) pour l'écoulement de la masse fondue vers la chambre (3) d'évacuation, et en ce que l'extrémité des injecteurs (9) émerge, dans la chambre (2) de fusion, au niveau de la surface du revêtement (17), permettant ainsi la formation d'une couche mince de masse fondue (19) sur le revêtement (17).

**10.** Dispositif conforme à la revendication 9, caractérisé en ce que le revêtement (17) contient des résistances électriques (18) pour maintenir la masse fondue à la température de fusion afin de faciliter son écoulement vers la chambre (3) d'évacuation par l'ouverture (7) et son évacuation par l'orifice (10).

**11.** Dispositif conforme à la revendication 8, caractérisé en ce que les injecteurs (9) disposés dans les briques réfractaires (15) émergent au-dessus de la surface de la sole (5) de la chambre (2) de fusion et en ce qu'il comprend, en outre, des électrodes (14) disposées dans la masse fondue (13) pour chauffer la masse fondue de manière à la maintenir à la température de fusion afin de faciliter son écoulement par l'ouverture (7) et son évacuation par l'orifice (10).

**12.** Dispositif conforme à la revendication 8, caractérisé en ce que la sole (5) de la chambre (2) de fusion comprend une zone de combustion de gaz munie d'un brûleur (20) et reliée à des canaux pour le passage de gaz de combustion servant au chauffage de la partie inférieure de la chambre (2) de fusion, ces canaux communiquant par l'orifice (10) d'évacuation de la masse fondue avec la chambre (3) d'évacuation et la cheminée (8).

**13.** Dispositif conforme à la revendication 7, caractérisé en ce que la sole (5) de la chambre (2) de fusion est recouverte d'un lit (23) formé de briques réfractaires dont l'épaisseur est supérieure à l'ouverture (7), et en ce que les moyens d'injection de gaz sont constitués par des injecteurs (9) disposés dans des briques réfractaires, situés à la partie inférieure d'une paroi latérale de la chambre (2) de fusion et débouchant dans le lit (23) de briques réfractaires.

**14.** Dispositif conforme à la revendication 13, caractérisé en ce qu'il comprend, en outre, un brûleur (24), situé à la partie inférieure d'une paroi latérale de la chambre (2) de fusion au niveau des injecteurs (9) pour chauffer le lit (23) de briques réfractaires.

**15.** Dispositif conforme à l'une quelconque des revendications 7 à 14, caractérisé en ce qu'il comprend, en outre, un brûleur (12), situé à la partie inférieure de la chambre (3) d'évacuation des gaz de combustion et de la masse fondue de manière à maintenir cette dernière à la température de fusion et à en faciliter l'évacuation.

## Claims

**1.** Process for melting in a furnace a material, in particular waste, containing inorganic fibres, organic matter and water, if necessary, characterised in that pure oxygen or oxygen-enriched air of which the oxygen content is at least approximately 40 volume %, is introduced into the furnace such that the organic matter in the fibrous material is burnt and releases at least principally the heat which causes the fibrous material to melt; and in that additional heat is added, if necessary, in order to facilitate the evacuation of the molten material.

**2.** Process according to Claim 1, characterised in that the oxygen or oxygen-enriched air is introduced close and preferably very close to the boundary layer between the molten material and the fibrous material which is above the latter.

6

3. Process according to either of Claims 1 and 2, characterised in that the oxygen or oxygen-enriched air is introduced from below.

4. Process according to any one of the preceding claims, characterised in that oxygen-enriched air of which the oxygen content is at least 50 volume % and preferably at least 60 volume %, for example at least 75 volume %, is introduced into the furnace.

5. Process according to any one of the preceding claims, characterised in that it is performed with a fibrous material of which the adiabatic temperature exceeds approximately 850°C and preferably exceeds approximately 1200°C.

6. Process according to any one of the preceding claims, characterised in that it is performed with waste from the production of mineral fibres, preferably glass fibres.

7. Device for implementing the melting process according to any one of Claims 1 to 6, characterised in that it comprises a chamber (2) for melting the material to be processed which is delimited by walls (4), a floor (5) and a vault (6), and a separate chamber (3) for evacuating the molten mass and combustion gases, an opening (7) provided in the lower part of the wall separating the two chambers permitting the flow of the molten mass formed in the vicinity of the floor (5) before this mass is evacuated via an opening (10) in the evacuation chamber (3) and an opening (11) provided in the upper part of the wall enabling the combustion gases to be evacuated to a flue (8), and characterised in that it further comprises means (9) for injecting a gas which lead into a boundary layer separating the molten mass from the remainder of the material to be processed which lies thereabove in the melting chamber.

8. Device according to Claim 7, characterised in that the means for injecting the gas consist of injectors (9) disposed in fire bricks (15) and located in the floor (5) of the melting chamber (2) such that their ends emerge at the lower part of the opening (7) for the flow of the molten mass to the evacuation chamber (3) and in the vicinity of the boundary layer between the molten mass and the material to be processed.

9. Device according to Claim 8, characterised in that the floor (5) of the melting chamber (2) has a covering (17) made of a material which is resistant to the molten mass and of which the surface corresponds to the lower part of the opening (7) for the flow of the molten mass to the evacuation chamber (3); and in that the ends of the injectors (9) emerge, in the melting chamber (2), at the surface of the covering (17) thus enabling a thin layer of molten mass (19) to form on the covering (17).

10. Device according to Claim 9, characterised in that the covering (17) contains electrical resistances (18) for maintaining the molten mass at the melting temperature in order to facilitate its flow to the evacuation chamber (3) via the opening (7) and its evacuation via the opening (10).

11. Device according to Claim 8, characterised in that the injectors (9) disposed in the fire bricks (15) emerge above the surface of the floor (5) of the melting chamber (2); and in that it further comprises electrodes (14) disposed in the molten mass (13) in order to heat the molten mass so as to maintain it at the melting temperature in order to facilitate its flow via the opening (7) and its evacuation via the opening (10).

12. Device according to Claim 8, characterised in that the floor (5) of the melting chamber (2) comprises a gas combustion area provided with a burner (20) and connected to ducts for the passage of combustion gas which is used to heat the lower part of the melting chamber (2), these ducts communicating via the opening (10) for the evacuation of the molten mass with the evacuation chamber (3) and the flue (8).

13. Device according to Claim 7, characterised in that the floor (5) of the melting chamber (2) is covered with a bed (23) of refractory bricks of which the thickness is greater than the opening (7); and in that the gas injection means consist of injectors (9) which are disposed in fire bricks, which are located in the lower part of a lateral wall of the melting chamber (2) and which lead into the bed (23) of fire bricks.

14. Device according to Claim 13, characterised in that it further comprises a burner (24) located in the lower part of a side wall of the melting chamber (2) at the level of the injectors (9) in order to heat the bed (23) of fire bricks.

15. Device according to any one of Claims 7 to 14, characterised in that it further comprises a burner (12) located in the lower part of the chamber (3) for the evacuation of the combustion gases and of the molten mass so as to maintain the latter at the melting temperature and to facilitate its evacuation.

**Patentansprüche**

1. Verfahren zum Schmelzen eines Materials in einem Schmelzofen, insbesondere von Abfällen, welche anorganische Fasern, organische Substanz und gegebenenfalls Wasser enthalten, dadurch gekennzeichnet, daß reiner Sauerstoff oder mit Sauerstoff angereicherte Luft mit einem Sauerstoffgehalt von mindestens ca. 40 Vol.-% in den Schmelzofen eingeführt wird, so daß die organische Substanz des Fasermaterials verbrannt wird und wenigstens in erster Linie die Wärme abgibt, die das Fasermaterial zum Schmelzen bringt, und daß erforderlichenfalls zusätzliche Wärme zugeführt wird, um das Ablassen des geschmolzenen Materials zu erleichtern.

2. Verfahren nach Anspruch 1, dadurch gekennzeichnet, daß der Sauerstoff oder die mit Sauerstoff angereicherte Luft nahe bei und vorzugsweise sehr nahe bei der Grenzschicht zwischen dem geschmolzenen Material und dem darüberliegenden Fasermaterial eingeführt wird.

3. Verfahren nach Anspruch 1 oder 2, dadurch gekennzeichnet, daß der Sauerstoff oder die mit Sauerstoff angereicherte Luft von unter her eingeführt wird.

4. Verfahren nach einem der vorhergehenden Ansprüche, dadurch gekennzeichnet, daß mit Sauerstoff angereicherte Luft, deren Sauerstoffgehalt mindestens 50 Vol.-% und vorzugsweise mindestens 60 Vol.-%, beispielsweise mindestens 75 Vol.-%, beträgt, in den Schmelzofen eingeführt wird.

5. Verfahren nach einem der vorhergehenden Ansprüche, dadurch gekennzeichnet, daß es mit einem Fasermaterial durchgeführt wird, dessen adiabatische Temperatur höher als ca. 850°C und vorzugsweise höher als ca. 1200°C ist.

6. Verfahren nach einem der vorhergehenden Ansprüche, dadurch gekennzeichnet, daß es mit Abfällen aus der Produktion von Mineralfasern, vorzugsweise von Glasfasern, durchgeführt wird.

7. Vorrichtung für die Buchführung des Schmelzverfahrens nach einem der Ansprüche 1 bis 6, dadurch gekennzeichnet, daß sie eine Schmelzkammer (2) für das zu behandelnde Material aufweist, die von Wänden (4), einer Sohle (5) und einer Decke (6) begrenzt ist, sowie eine separate Auslaßkammer (3) für die geschmolzene Masse und die Verbrennungsgase, eine im Unterteil der die beiden Kammern voneinander trennenden Wand angebrachte Öffnung (7), welche das Ablaufen der in der Nähe der Sohle (5) gebildeten geschmolzenen Masse vor ihrem Ablassen durch eine Öffnung (10) in der Auslaßkammer (3) ermöglicht, und eine im Oberteil dieser Wand angebrachte Öffnung (11), welche das Ablassen der Verbrennungsgase zu einem Kamin (8) erlaubt, sowie dadurch gekennzeichnet, daß sie des weiteren Mittel (9) zum Einblasen eines Gases aufweist, die in eine Grenzschicht münden, welche die geschmolzene Masse vom Rest des in der Schmelzkammer darüberliegenden zu behandelnden Materials trennt.

8. Vorrichtung nach Anspruch 7, dadurch gekennzeichnet, daß die Mittel zum Einblasen des Gases aus Düsen (9) bestehen, die in feuerfesten Ziegeln (15) in der Sohle (5) der Schmelzkammer (2) derart angeordnet sind, daß ihr Ende auf Höhe des Unterteils der Öffnung (7) zum Ablaufen der geschmolzenen Masse zur Auslaßkammer (3) und in der Nähe der Grenzschicht zwischen der geschmolzenen Masse und dem zu behandelnden Material austritt.

9. Vorrichtung nach Anspruch 8, dadurch gekennzeichnet, daß die Sohle (5) der Schmelzkammer (2) eine Verkleidung aus einem gegen die geschmolzene Masse widerstandsfähigen Material (17) aufweist, deren Oberfläche dem Unterteil der Öffnung (7) zum Ablaufen der geschmolzenen Masse zur Auslaßkammer (3) entspricht, und daß das Ende der Düsen (9) in der Schmelzkammer (2) auf Höhe der Oberfläche der Verkleidung (17) austritt, wodurch die Bildung einer dünnen Schicht geschmolzener Masse (19) auf der Verkleidung (17) ermöglicht wird.

**10.** Vorrichtung nach Anspruch 9, dadurch gekennzeichnet, daß die Verkleidung (17) elektrische Widerstände (18) enthält, damit die geschmolzene Masse auf der Schmelztemperatur gehalten wird, um ihr Ablaufen zur Auslaßkammer (3) durch die Öffnung (7) und ihr Ablassen durch die Öffnung (10) zu erleichtern.

**11.** Vorrichtung nach Anspruch 8, dadurch gekennzeichnet, daß die in den feuerfesten Ziegeln (15) angeordneten Düsen (9) über der Oberfläche der Sohle (5) der Schmelzkammer (2) austreten, und dadurch, daß sie des weiteren Elektroden (14) aufweist, die in der geschmolzenen Masse (13) angeordnet sind, um die geschmolzene Masse so aufzuheizen, daß sie auf der Schmelztemperatur gehalten wird, um ihr Ablaufen durch die Öffnung (7) und ihr Ablassen durch die Öffnung (10) zu erleichtern.

**12.** Vorrichtung nach Anspruch 8, dadurch gekennzeichnet, daß die Sohle (5) der Schmelzkammer (2) eine Zone zum Verbrennen von Gasen aufweist, welche mit einem Brenner (20) versehen und mit Kanälen zum Durchströmen von Verbrennungsgasen verbunden ist, welche zum Aufheizen des Unterteils der Schmelzkammer (2) dienen, wobei diese Kanäle durch die Öffnung (10) zum Ablassen der geschmolzenen Masse mit der Auslaßkammer (3) und dem Kamin (8) in Verbindung stehen.

**13.** Vorrichtung nach Anspruch 7, dadurch gekennzeichnet, daß die Sohle (5) der Schmelzkammer (2) mit einem aus feuerfesten Ziegein gebildeten Bett (23) bedeckt ist, dessen Dicke größer als die Öffnung (7) ist, und dadurch, daß die Mittel zum Einblasen von Gas aus Düsen (9) bestehen, welche in feuerfesten Ziegein am Unterteil einer Seitenwand der Schmelzkammer (2) angeordnet sind und in das Bett (23) aus feuerfesten Ziegeln münden.

**14.** Vorrichtung nach Anspruch 13, dadurch gekennzeichnet, daß sie des weiteren einen Brenner (24) aufweist, der am Unterteil einer Seitenwand der Schmelzkammer (2) auf Höhe der Düsen (9) angeordnet ist, um das Bett (23) aus feuerfesten Ziegein aufzuheizen.

**15.** Vorrichtung nach einem der Ansprüche 7 bis 14, dadurch gekennzeichnet, daß sie des weiteren einen Brenner aufweist, der (12) am Unterteil der Auslaßkammer (3) für die Verbrennungsgase und die geschmolzene Masse so angeordnet ist, daß diese letztere auf der Schmelztemperatur gehalten und ihr Ablassen erleichtert wird.

## FIG.1

# FIG. 2

FIG_3

## FIG_4

FIG. 5

## FIG. 6